(19) Europäisches Patentamt
European Patent Office
Office européen des brevets

(11) EP 3 179 097 A1

(12) EUROPEAN PATENT APPLICATION

(43) Date of publication:
14.06.2017 Bulletin 2017/24

(51) Int Cl.:
$F03D\ 7/02^{(2006.01)}$

(21) Application number: 16202852.6

(22) Date of filing: 08.12.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 11.12.2015 JP 2015241888

(71) Applicant: Hitachi, Ltd.
Tokyo 100-8280 (JP)

(72) Inventors:
• KAKUYA, Hiromu
Tokyo, 100-8280 (JP)
• KIYOKI, Souichiro
Tokyo, 100-8280 (JP)
• SHIRAISHI, Takashi
Tokyo, 100-8280 (JP)

(74) Representative: MERH-IP Matias Erny Reichl
Hoffmann
Patentanwälte PartG mbB
Paul-Heyse-Strasse 29
80336 München (DE)

(54) WIND POWER GENERATING SYSTEM AND METHOD FOR CONTROLLING WIND POWER GENERATING SYSTEM

(57) There is provided a wind power generating system 1 including: a rotor 4 that receives wind and rotates; a tower 8 that supports a load of the rotor 4; a power generator 6 that generates power using rotation energy of the rotor 4; and a controller 9 that controls generator torque of the power generator 6 and a rotor rotation speed of the rotor 4. In the wind power generating system 1, the controller 9 transitions to a first control mode in which the generator torque is reduced in a case where the rotor rotation speed is increased and is equal to or exceeds a first rotor rotation speed, then, continuously operates in the first control mode, and transitions to a second control mode in which a slope of the generator torque with respect to the rotor rotation speed is different from a slope in the first control mode. In addition, the controller 9 transitions to a third control mode in which the generator torque is increased, in a case where the rotor rotation speed is decreased and is lower than a second rotor rotation speed, then, continuously operates in the third control mode, and transitions to a fourth control mode in which the slope of the generator torque with respect to the rotor rotation speed is different from a slope in the third control mode.

FIG. 5

**Description**

BACKGROUND OF THE INVENTION

FIELD OF THE INVENTION

The present invention relates to a wind power generating system, and, particularly, to a wind power generating system that suitably reduces a resonance produced in a tower.

BACKGROUND ART

In recent years, global warming due to an increase in emission of carbon dioxide or an energy shortage due to the depletion of fossil fuels is concerned, which results in a demand for reduction in the emission of carbon dioxide or improvement of energy self-sufficiency. In this respect, it is effective to introduce a power generating system that can generate power using renewable energy obtained from nature such as wind or sunlight, without emission of carbon dioxide and without using fossil fuels obtained mainly through import from abroad.

Among power generating systems using the renewable energy, a wind power generating system, which does not have a sharp output change depending on insolation as in a solar power system, attracts attention as a power generating system that is capable of achieving a relatively stable generation output. In addition, a wind power generating system constructed in the sea where a wind speed is high and the wind speed is less changed, compared to the land, attracts attention as a promising power generating system. Note that, in the windpower generating system, since energy conversion efficiency of a rotor varies depending on the wind speed, variable speed control, in which a control range of a rotor rotation speed is variable, is performed.

In order to supply stable power using the windpower generating system, atechnology, which reduces oscillations produced inablade, a tower, and a drive-train with which the wind power generating system is configured, is needed. Particularly, the oscillations of the tower as a structure that supports the entire system bring about producing oscillations in components, in some cases.

A natural frequency of the tower at the time of construction is changed due to turbulence of wind occurring in adverse weather in which a windstorm called a typhoon is generated according to a construction site, abrupt change in a wind direction due to low pressure, or the like, in some cases. At this time, the natural frequency of the tower described above, results in being included within the control range of the rotor rotation speed, which will be described below. In this circumstance, a rotation motion of the rotor of the wind power generating system matches the natural frequency of the tower, and the oscillations of the tower are increased, that is, it is possible for resonance of the tower to be produced. Such resonance of the tower results in an increase in the amplitude of the oscillations of the tower, and thereby it is possible to result in an adverse effect such as fatigue accumulation or the maximum load increase.

Here, an operation control unit is disclosed in EP 2113659 B1, in consideration of reduction in the oscillations of the tower of the wind power generating system. EP 2113659 B1 discloses "method of operation of a wind turbine which minimizes the oscillations of the tower".

In short, there is a unit "that performs an operation of increasing generator torque at a rotation speed lower than the natural frequency of the tower, compared to a case where the operation control unit is not applied, in a case where a natural frequency of a tower is included in a range of a rotor rotation speed and the rotation speed is increased in response to an increase in a wind speed in a plane def inedby the rotor rotation speed and generator torque, then, that performs an operation of lowering the generator torque with respect to the increase in the rotor rotation speed when the rotation speed is increased passing the natural frequency of the tower, that performs an operation of lowering the generator torque, compared to the case where the operation control unit is not applied, after the rotor rotation speed exceeds the natural frequency of the tower, and that performs an operation of increasing the generator torque to the generator torque obtained in the case where the operation control unit is not applied, in response to an increase in the rotor rotation speed".

Since application of the technology disclosed in EP 2113659 B1 allows a period, during which the rotor rotation speed matches the natural frequency of the tower, to be shortened, it is possible to reduce an occurrence of resonance of the tower.

The application of the technology disclosed in EP 2113659 B1 enables an occurrence of resonance of the tower to be reduced when the natural frequency of the tower is included within the operation range of the rotor rotation speed. However, the technology disclosed in EP 2113659 B1 changes not only the rotor rotation speed, but also the generator torque, when the rotor rotation speed passes in the vicinity of the natural frequency of the tower. Therefore, wind energy, which is input, is not used only for a change in the rotor rotation speed, thus it is not possible to sufficiently shorten the period during which the rotor rotation speed approximately matches the natural frequency of the tower, and it is not possible to sufficiently reduce the resonance of the tower in some cases. Accordingly, it is not possible to sufficiently reduce the fatigue accumulation or the maximum load increase due to the resonance of the tower, in some cases.

Hence, an object of the present invention is to provide an operation control unit that is capable of sufficiently reducing an occurrence of resonance of a tower.

SUMMARY OF THE INVENTION

In order to solve the problems described above, according to an aspect of the present invention, there is provided a wind power generating system including: a rotor that receives wind and rotates; a tower that supports a load of the rotor; a power generator that generates power using rotation energy of the rotor; and/or a controller that controls generator torque of the power generator and a rotor rotation speed of the rotor. In the wind power generating system, the controller transitions to a first control mode in which the generator torque is reduced in a case where the rotor rotation speed is increased and is equal to or exceeds a first rotor rotation speed, then, continuously operates in the first control mode, and transitions to a second control mode in which a slope of the generator torque with respect to the rotor rotation speed is different from a slope in the first control mode. In addition, the controller transitions to a third control mode in which the generator torque is increased, in a case where the rotor rotation speed is decreased and is lower than a second rotor rotation speed, then, continuously operates in the third control mode, and transitions to a fourth control mode in which the slope of the generator torque with respect to the rotor rotation speed is different from a slope in the third control mode.

In addition, according to another aspect of the present invention, there is provided a method for controlling a wind power generating system including: transitioning to a first control mode in which the generator torque is reduced in a case where a rotor rotation speed is increased and is equal to or exceeds a first rotor rotation speed; transitioning to a second control mode in which a slope of generator torque with respect to a rotor rotation speed is different from a slope in the first control mode, after the transitioning to the first control mode; transitioning to a third control mode in which generator torque is increased, in a case where a rotor rotation speed is decreased and is lower than a second rotor rotation speed; and transitioning to a fourth control mode in which a slope of generator torque with respect to a rotor rotation speed is different from a slope in the third control mode, after the transitioning to the third control mode.

According to the present invention, it is possible to provide a wind power generating system including a controller that is capable of controlling fatigue accumulation and the maximum load increase due to resonance of a tower even when a natural frequency of the tower is included within a control range of a rotor rotation speed due to an environment of use.

Problems, configurations, or effects other than those described above will be clearly described in the following embodiment.

BRIEF DESCRIPTION OF THE DRAWINGS

Fig. 1 is a diagram illustrating an outline of a configuration of a wind power generating system according to an embodiment of the present invention.
Fig. 2 is a graph schematically illustrating a relationship between a rotation speed of a rotor and torque of a power generator during control of the wind power generating system in a case where the present invention is not applied.
Fig. 3 is a block diagram illustrating an outline of a process of an operation control unit that is mounted in a controller of the wind power generating system according to the embodiment of the present invention.
Fig. 4 is a graph schematically illustrating a relationship between a rotation speed of a rotor and torque of a power generator in the operation control unit according to the embodiment of the present invention.
Fig. 5 is a graph schematically illustrating a transition state of the rotation speed of the rotor and the torque of the power generator when the rotation speed of the rotor is in the vicinity of a natural frequency of a tower, in the operation control unit according to the embodiment of the present invention.
Fig. 6 is a time chart illustrating an outline of a change in the rotation speed of the rotor and the torque of the power generator when a wind speed is increased and thus the rotation speed of the rotor is increased and passes the natural frequency of the tower, in the operation control unit according to the embodiment of the present invention.
Fig. 7 is a time chart illustrating an outline of a change in the rotation speed of the rotor and the torque of the power generator when the wind speed is decreased and thus the rotation speed of the rotor is decreased and passes the natural frequency of the tower, in the operation control unit according to the embodiment of the present invention.
Fig. 8 is a flowchart illustrating an outline of a process of a target value calculating section in the operation control unit according to the embodiment of the present invention.

DETAILED DESCRIPTION OF THE INVENTION

Hereinafter, an embodiment of the present invention will be described with reference to the figures. Note that the following description is provided only as an example, the embodiment of the present invention is not limited to the following example.

Example 1

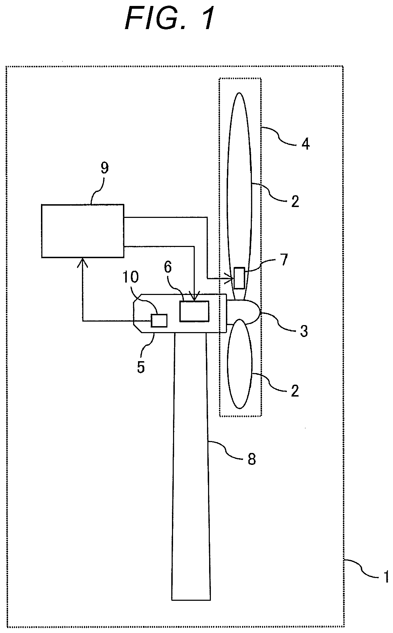

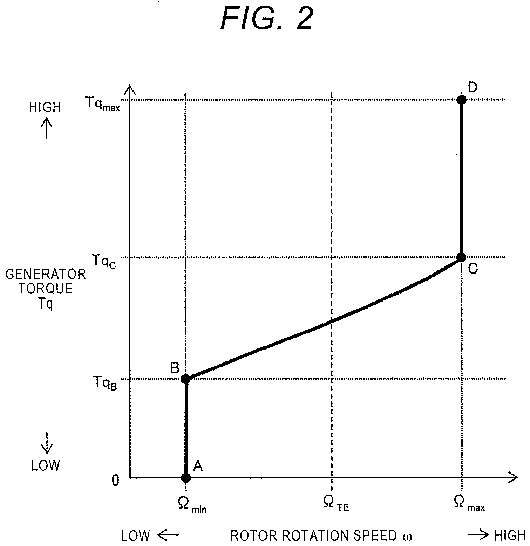

Hereinafter, an example of the present invention will be described; however, a schematic configuration and control of a wind power generating system, to which the present invention is assumed to be applied, are first described with reference to Figs. 1 and 2.

First, an entire schematic configuration of the wind power generating system, to which the present invention is applicable, is described with reference to Fig. 1.

A wind power generating system 1 in Fig. 1 includes a rotor 4 that is configured of a plurality of blades 2 and a hub 3 which connects the plurality of blades 2. The rotor 4 is connected to a nacelle 5 via a rotary shaft (not illustrated in Fig. 1), and rotation of the rotor causes a position of the blade 2 to be changed. The nacelle 5 supports the rotor 4 in a rotatable manner. The nacelle 5 includes a power generator 6 at an appropriate position. The blade 2 receives wind, thereby the rotor 4 rotates, the rotating force of the rotor 4 causes the power generator 6 to rotate, and thus it is possible to generate power.

Each of the blades 2 is provided with a pitch actuator 7 that is capable of changing a positional relationship between the blade 2 and the hub 3, that is, an angle of the blade referred to as a pitch angle. The pitch angle of the blade 2 is changed by using the pitch actuator 7, and thereby it is possible to change rotation energy of the rotor 4 with respect to the wind. Thus, while a rotation speed of the rotor 4 in a wide wind speed region is controlled, it is possible to control power generation of the wind power generating system 1.

In the wind power generating system 1 in Fig. 1, the nacelle 5 is provided on a tower 8, and is rotatably supported on the tower 8. A load of the blade 2 is supported by the tower 8 via the hub 3 and the nacelle 5. The tower 8 is disposed on a foundation (not illustrated), and is disposed at a predetermined position on land or in the sea.

In addition, the wind power generating system 1 includes a controller 9 and the controller 9 controls the power generator 6 and the pitch actuator 7 based on a rotation speed sensor 10 that measures a rotation speed of the rotor 4 such that power output from the wind power generating system 1 is controlled.

Note that a wind-direction sensor that measures a wind direction, an electric sensor that measures active power output from the power generator, or the like are provided at an appropriate position.

In Fig. 1, the controller 9 is disposed on the outer portion of the nacelle 5 or the tower 8; however, the invention is not limited thereto, and the controller 9 may be disposed inside the nacelle 5 or the tower 8, at a predetermined position other than the positions of the nacelle and the tower, or in the outside of the wind power generating system 1.

Here, an overview of a power generating operation of the wind power generating system 1 is described with reference to Fig. 2. However, Fig. 2 illustrates the overview of a standard wind power generating system in a case where an operation control unit 101, to be described below, of the present invention is not applied thereto. Fig. 2 illustrates generator torque with respect to a rotor rotation speed. The horizontal axis represents the rotor rotation speed, the vertical axis represents generator torque, the rotor rotation speed is high on a right side on the horizontal axis, and the generator torque is high in an upper portion on the vertical axis.

The wind power generating system 1 controls the rotor rotation speed in a range of $\Omega_{min}$ to $\Omega_{max}$. In general, the range of the rotor rotating speed is determined from an operation range of the power generator 6. In response to an increase of the wind speed, while the rotor rotation speed is maintained at $\Omega_{min}$ at a low speed, the generator torque is increased from 0 to $Tq_B$. When the generator torque is equal to or higher than $Tq_B$, the generator torque is increased to $Tq_C$ at a point C, and a track BC is formed such that output characteristics of the blade of the rotor 4 is the maximum, that is, energy conversion efficiency of the rotor is the maximum, and the generator torque is determined based on the rotor rotation speed. At this time, the generator torque is calculated in the following expression.

$$\text{Expression (1)}$$

$$Tq = K_{opt} \times \Omega_2$$

Here, $K_{opt}$ is a gain used to determine the generator torque on the track BC. When the generator torque is equal to or higher than $Tq_C$, the generator torque is increased to $Tq_{max}$ while the rotor rotation speed is maintained.

As illustrated above, the wind power generating system 1 changes the rotor rotation speed, and thereby control is performed such that wind energy is efficiently converted into power energy.

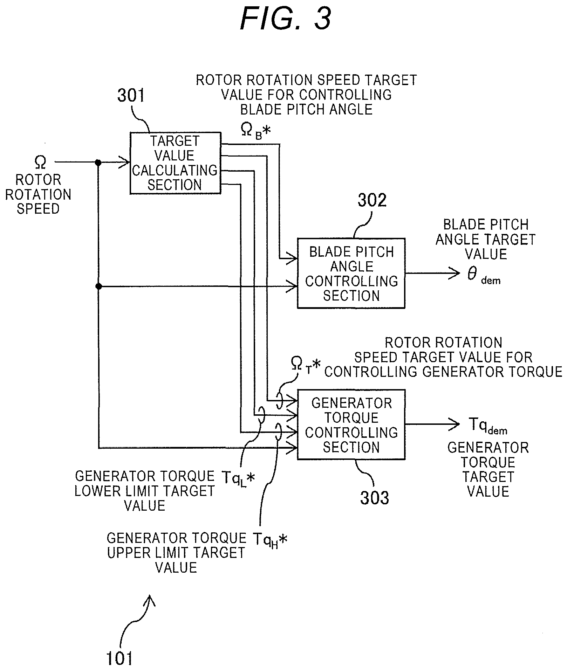

Next, an operation control unit 101 that is mounted in a controller (controller 9) of the wind power generating system 1 will be described with reference to Figs. 3 to 8. Even when a natural frequency of the tower 8 is included within a control range of the rotor rotation speed, the operation control unit 101 aims to shorten a period during which the rotor rotation speed passes the natural frequency of the tower such that an influence of oscillation of the tower is reduced. Note that, hereinafter, it is assumed that a natural frequency $\Omega_{TE}$ of the tower is included within the control range of the rotor rotation speed as illustrated in Fig. 2.

Fig. 3 is a block diagram the operation control unit 101. The operation control unit 101 is configured to include a target value calculating section 301, a blade pitch angle control section 302, and a generator torque control section 303.

The target value calculating section 301 calculates a rotor rotation speed target value $\Omega_B{}^*$ for controlling a blade pitch angle, a rotor rotation speed target value $\Omega_T{}^*$ for controlling the generator torque, a generator torque lower limit target value $Tq_L{}^*$, and a generator torque upper limit target value $Tq_H{}^*$, based on a rotor rotation speed $\Omega$. The values are changed based on a state of $\Omega$ as the input, and the wind power generating system 1 is controlled such that the rotor rotation speed and the generator torque are drawn along a predetermined track described above. Note that the rotor rotation speed is an output signal of the rotation speed sensor 10 described above.

The blade pitch angle control section 302 determines a blade pitch angle target value $\theta_{dem}$, based on rotor rotation speed $\Omega$ and rotor rotation speed target value $\Omega_B^*$ for controlling a blade pitch angle. Detailed description is not provided, and blade pitch angle control section is configured to perform feedback control based on a difference between the rotor rotation speed $\Omega$ and the rotor rotation speed target value $\Omega_B^*$ for controlling a blade pitch angle, the blade pitch angle target value $\theta_{dem}$ is calculated by proportion, integration, or differential of the difference, or adding a component obtained by combining some of the values; however, the calculation is not limited.

The generator torque control section 303 determines the rotor rotation speed target value $\Omega_T^*$ for controlling the generator torque, a generator torque lower limit target value $Tq_L^*$, a generator torque upper limit target value $Tq_H^*$, and a generator torque target value $Tq_{dem}$ based on a rotor rotation speed $\Omega$. Similar to the blade pitch angle control section 302 described above, the generator torque control section is configured to perform feedback control using a difference between the rotor rotation speed $\Omega$ and the rotor rotation speed target value $\Omega_T^*$ for controlling a generator torque. Upper and lower limit values of an output calculated by the feedback control are adjusted by the generator torque lower limit target value $Tq_L^*$ and the generator torque upper limit target value $Tq_H^*$, thereby determining the final generator torque target value $Tq_{dem}$; however, the invention is not limited thereto.

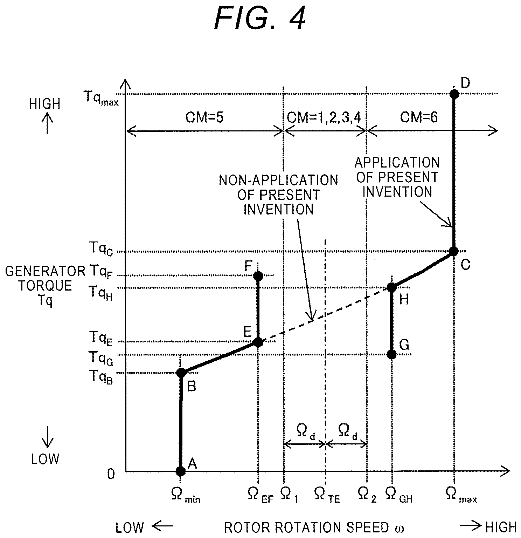

Fig. 4 illustrates a track of a control state of the wind power generating system 1 that is realized by the operation control unit 101 according to the present invention. The horizontal axis and the vertical axis represent the rotor rotation speed and the generator torque, respectively, and a control state is illustrated in which the rotor rotation speed is high on the right side on the horizontal axis and the generator torque is high on the upper side on the vertical axis. Note that a broken line indicates a track formed in the control state in which the operation control unit 101 according to the present invention illustrated in Fig. 2 is not applied.

The operation control unit 101 according to the present invention is applied to the wind power generating system, and thereby the wind power generating system 1 is controlled so as to follow a track ABEF, based on the rotor rotation speed, when the rotor rotation speed is lower than $\Omega_1$ lower than the natural frequency $\Omega_{TE}$ of the tower by a predetermined value $\Omega_d$. In response to the increase in the wind speed, the rotor rotation speed is $\Omega_{min}$ and the generator torque is increased from 0 to $Tq_B$ along a track AB. Further, based on Expression (1) described above, along a track BE, the rotor rotation speed is increased from $\Omega_{min}$ to $\Omega_{EF}$ and the generator torque is increased from $Tq_B$ to $Tq_E$. Further, along a track EF, the rotor rotation speed remains at $\Omega_{EF}$ and the generator torque is increased from $Tq_E$ to $Tq_F$. Note that, on a track EF, the generator torque has a higher value to the extent that the generator torque escapes from the track of the generator torque based on Expression (1) described above.

In a case where the wind speed increases, the wind power generating system 1 is operated along a track GHCD with the rotor rotation speed within a range of $\Omega_{GH}$ to $\Omega_{max}$ equal to or higher than $\Omega_2$ higher than the natural frequency $\Omega_{TE}$ of the tower by the predetermined value $\Omega_d$. Here, a value that is obtained through simulations or experiments and is stored in a program in advance may be used as the predetermined value $\Omega_d$ described above, or the predetermined value $\Omega_d$ may be determined based on output values from various sensors that measure the states of the wind power generating system 1, which is not clearly described in the figures. In response to the increase in the wind speed, along a track GH, the rotor rotation speed remains at $\Omega_{GH}$ and the generator torque is increased from $Tq_G$ to $Tq_H$. Along a track HC, based on Expression (1) described above, the rotor rotation speed is increased from $\Omega_{GH}$ to $\Omega_{max}$ and the generator torque is increased from $Tq_H$ to Tqc. Along a track CD, the rotor rotation speed remains at $Q_{max}$ and the generator torque is increased from Tqc to $Tq_{max}$. Note that, on a track GH, the generator torque has a lower value to the extent that the generator torque escapes from the track of the generator torque based on Expression (1) described above.

A value that is obtained through simulations or experiments in advance and is stored in a program may be used as the natural frequency $\Omega_{TE}$ of the tower, or the natural frequency $\Omega_{TE}$ may be determined based on output signals from various sensors that measure the states of the wind power generating system 1.

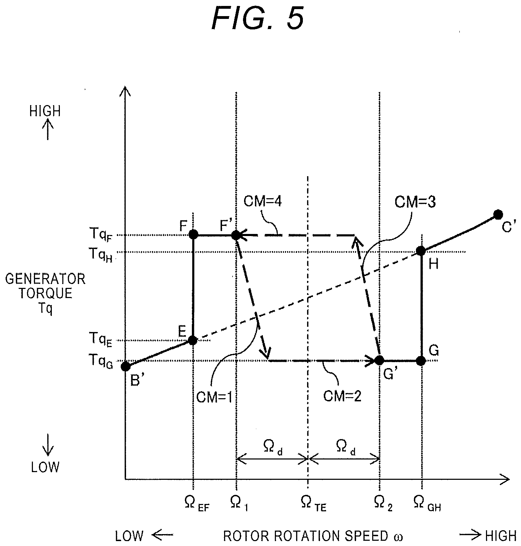

As described above, only the control track that avoids the natural frequency $\Omega_{TE}$ of the tower is illustrated, and, hereinafter, another control track obtained when the rotor rotation speed passes $\Omega_{TE}$ will be described with reference to Figs. 5 to 7. Note that, hereinafter, a plurality of control states are defined by a control mode (CM). With respect to Figs. 4 and 5, the wind speed increases, then the rotor rotation speed is increased, and a control mode obtained when the rotor rotation speed passes $\Omega_{TE}$ is defined as a first control mode and a second control mode (CM = 1 and CM = 2, respectively). Further, the wind speed is decreased, then the rotor rotation speed is decreased, a control mode obtained when the rotor rotation speed passes $\Omega_{TE}$ is defined as a third control mode and a fourth control mode (CM = 3 and CM = 4, respectively). In addition, a control mode obtained on the track ABEF is defined as a fifth control mode (CM = 5), and a control mode obtained on the track GHCD is defined as a sixth control mode (CM = 6).

Fig. 5 illustrates an outline of the control track of the wind power generating system 1 in CM = 1, CM = 2, CM = 3, and CM = 4, described above. The horizontal axis and the vertical axis represent the rotor rotation speed and the generator torque, respectively, and a control state is illustrated in which the rotor rotation speed is high on the right side on the horizontal axis and the generator torque is high on the upper side on the vertical axis. Note that Fig. 5 is a view formed by particularly focusing on a control range of B' to C' in the vicinity of natural frequency $\Omega_{TE}$ of the tower in Fig. 4.

Hereinafter, the wind speed is increased, then the rotor rotation speed is increased, and a control track obtained in a case where the rotor rotation speed passes the natural frequency $\Omega_{TE}$ of the tower is described.

The wind power generating system 1 is operated along a track B' EF with the rotor rotation speed lower than $\Omega_1$. In a case where the control is performed in the vicinity of a point F in a control state, the generator torque remains at $Tq_F$ and the rotor rotation speed is increased to a point F'. When the rotor rotation speed is equal to or exceeds $\Omega_1$, the wind speed is determined to be further increased, and transition is performed to a control mode in which the rotor rotation speed passes the natural frequency $\Omega_{TE}$ of the tower. At this time, in CM = 1, the generator torque is reduced from $Tq_F$ to $Tq_G$. Then, in CM = 2, the generator torque remains at $Tq_G$ and the rotor rotation speed is increased to $\Omega_2$. In this manner, in CM=1, the generator torque is reduced, and in CM = 2, the generator torque remains to have a small value. Then, since the wind energy is used only in a change in the rotor rotation speed, it is possible to shorten the period during which the rotor rotation speed passes the natural frequency $\Omega_{TE}$ of the tower.

Next, the wind speed decreases, then the rotor rotation speed is decreased, and a control track obtained in a case where the rotor rotation speed passes the natural frequency $\Omega_{TE}$ of the tower is described.

The wind power generating system 1 is operated along a track GHC' with the rotor rotation speed equal to or higher than $\Omega_2$. In a case where the wind speed is further decreased due to the control state in the vicinity of a point G, the generator torque remains at $Tq_G$ and the rotor rotation speed is decreased to a point G'. When the rotor rotation speed is lower than $\Omega_2$, the wind speed is determined to be further decreased, and transition is performed to a control mode in which the rotor rotation speed passes the natural frequency $\Omega_{TE}$ of the tower. At this time, in CM = 3, the generator torque is increased from $Tq_G$ to $Tq_F$. Then, in CM = 4, the generator torque remains at $Tq_F$ and the rotor rotation speed is decreased to $\Omega_1$. In this manner, in CM = 3, the generator torque is increased, and in CM = 4, the generator torque remains to have a large value. Then, since the wind energy is used only in a change in the rotor rotation speed, it is possible to shorten the period during which the rotor rotation speed passes the natural frequency $\Omega_{TE}$ of the tower.

Note that, as illustrated in Fig. 5, when the rotor rotation speed passes the natural frequency $\Omega_{TE}$ of the

tower, the operation control unit 101 according to the present invention is characteristic in that different control tracks are formed between in the case where the rotor rotation speed is increased and in the case where the rotor rotation speed is decreased.

As described above, in the case where the rotor rotation speed is increased and is equal to or exceeds $\Omega_1$ (first rotor rotation speed), transition is performed to the first control mode of CM = 1 in which the generator torque is decreased, and, after transition is performed to the first control mode of CM = 1, transition is performed to the second control mode of CM = 2 in which a slope of the generator torque with respect to the rotor rotation speed is different from a slope in the first control mode of CM = 1.

In addition, in the case where the rotor rotation speed is decreased and is lower than $\Omega_2$ (second rotor rotation speed), transition is performed to the third control mode of CM = 3 in which the generator torque is increased, and, after the transition is performed to the third control mode of CM = 3, transition is performed to the fourth control mode of CM = 4 in which a slope of the generator torque with respect to the rotor rotation speed is different from a slope in the third control mode of CM = 3.

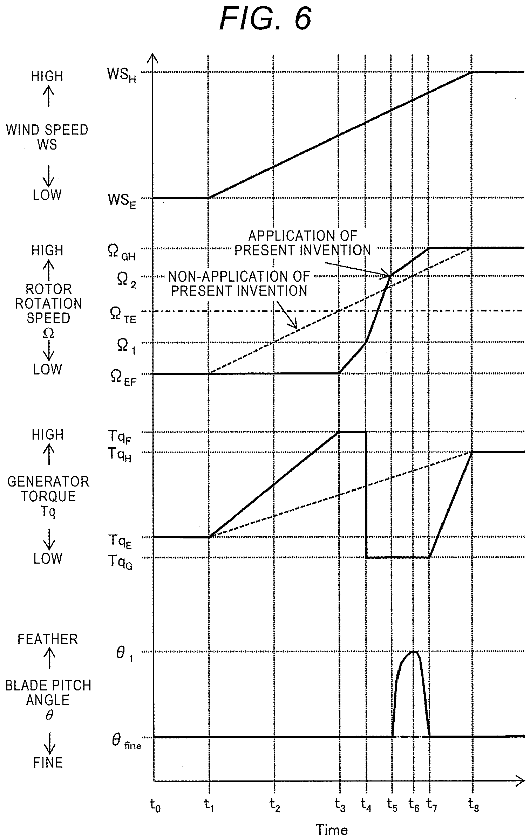

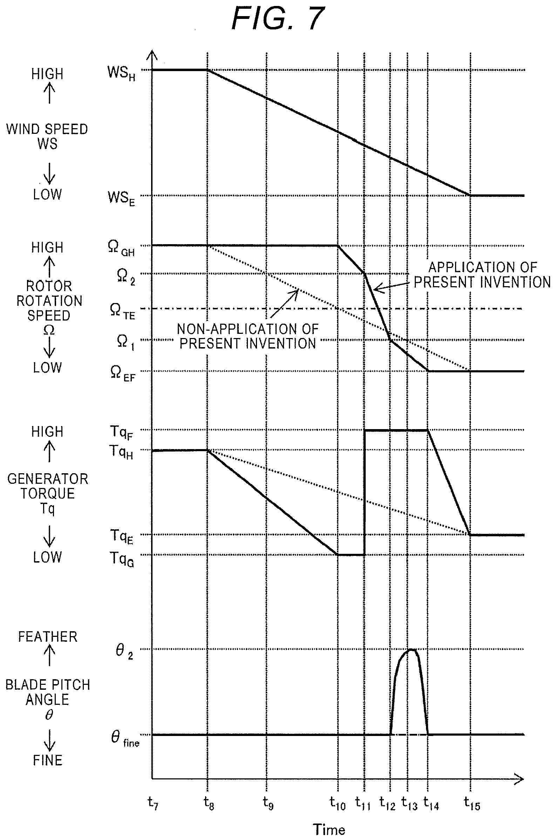

Hereinafter, with respect to Figs. 6 and 7, an overview of temporal variation of the rotor rotation speed and the generator torque during the change in the control modes illustrated in Fig. 5 will be described.

Fig. 6 is a timing chart illustrating an overview of an operation of CM = 1 and CM = 2 in which the wind speed is increased and the rotor rotation speed passes the natural frequency $\Omega_{TE}$ of the tower. In Fig. 6, the horizontal axis represents time, the vertical axis represents the wind speed, the rotor rotation speed, the generator torque, and the blade pitch angle, from the upper side, and the upper side in Fig. 6 indicates that the wind speed is increased, the rotor rotation speed is increased, the generator torque is increased, and the blade pitch angle is feathered. In addition, in Fig. 6, a solid line indicates a case where the operation control unit 101 according to the present invention is applied, and a broken line indicates a case where the operation control unit is not applied.

Hereinafter, as illustrated on the uppermost side in Fig. 6, a case where the wind speed is increased from a state of $WS_E$ at a time point $t_0$ to $WS_H$ at a time point $t_8$ is assumed.

In the case where the operation control unit 101 according to the present invention is not applied, as illustrated in a broken line, the rotor rotation speed is increased from $\Omega_{EF}$ to $\Omega_{GH}$ in response to the wind speed, and the generator torque is increased from $Tq_E$ to $Tq_H$. At this time, the generator torque has a value based on Expression (1) described above. In this case, a period, during which the rotor rotation speed remains in a range of $\Omega_1$ to $\Omega_2$ which is in the vicinity of the natural frequency $\Omega_{TE}$ of the tower, is from a time point $t_2$ to a time point

$t_6$. Note that the blade pitch angle is maintained to be $\theta_{fine}$.

In this respect, in the case where the operation control unit 101 according to the present invention illustrated in the solid line is applied, the rotor rotation speed is maintained at $\Omega_{EF}$ during a period of a time point $t_1$ to a time point $t_3$, and the generator torque is increased from $Tq_E$ to $Tq_F$. Since the generator torque is maintained at $Tq_F$ from the time point $t_3$ to a time point $t_4$, the rotor rotation speed is increased from $\Omega_{EF}$ to $\Omega_1$. The generator torque is decreased from $Tq_F$ to $Tq_G$ starting at the time point $t_4$ at which the rotor rotation speed is equal to $\Omega_1$. Accordingly, the rotor rotation speed is increased to $\Omega_2$ at a time point $t_5$. The generator torque is maintained at $Tq_G$ from the time point $t_5$ to the time point $t_7$, such that the rotor rotation speed is maintained at $\Omega_{GH}$ after this control, and the blade pitch angle temporarily changes from $\theta_{fine}$ to $\theta_1$. Further, the generator torque is increased from $Tq_G$ to $Tq_H$ from the time point $t_7$ to the time point $t_8$, and the rotor rotation speed is maintained at $\Omega_{GH}$.

In this manner, the operation control unit 101 according to the present invention is applied, thereby a period, during which the rotor rotation speed remains in a range of $\Omega_1$ to $\Omega_2$ which is in the vicinity of the natural frequency $\Omega_{TE}$ of the tower is shortened to a period of the time point $t_4$ to the time point $t_5$, and thus it is possible to reduce an occurrence of the resonance of the tower.

Fig. 7 is a timing chart illustrating an overview of an operation of CM = 3 and CM = 4 in which the wind speed is decreased and the rotor rotation speed passes the natural frequency $\Omega_{TE}$ of the tower. In Fig. 7, the horizontal axis represents time, the vertical axis represents the wind speed, the rotor rotation speed, the generator torque, and the blade pitch angle, from the upper side, and the upper side in Fig. 7 indicates that the wind speed is increased, the rotor rotation speed is increased, the generator torque is increased, and the blade pitch angle is feathered. In addition, in Fig. 7, a solid line indicates a case where the operation control unit 101 according to the present invention is applied, and a broken line indicates a case where the operation control unit is not applied.

Hereinafter, as illustrated on the uppermost side in Fig. 7, a case where the wind speed is decreased from a state of $WS_H$ at the time point $t_8$ to $WS_E$ at the time point $t_{15}$ is assumed.

In the case where the operation control unit 101 according to the present invention is not applied, as illustrated in a broken line, the rotor rotation speed is decreased from $\Omega_{GH}$ to $\Omega_{EF}$ in response to the wind speed, and the generator torque is decreased from $Tq_H$ to $Tq_E$. At this time, the generator torque has a value based on Expression (1) described above. In this case, a period, during which the rotor rotation speed remains in a range of $\Omega_1$ to $\Omega_2$ which is in the vicinity of the natural frequency $\Omega_{TE}$ of the tower, is from a time point $t_9$ to a time point $t_{13}$. Note that the blade pitch angle is maintained to be $\theta_{fine}$.

In this respect, in the case where the operation control unit 101 according to the present invention illustrated in the solid line is applied, the rotor rotation speed is maintained at $\Omega_{GH}$ during a period of the time point $t_8$ to the time point $t_{10}$, and the generator torque is decreased from $Tq_H$ to $Tq_G$. Since the generator torque is maintained at $Tq_G$ from the time point $t_{10}$ to a time point $t_{11}$, the rotor rotation speed is decreased from $\Omega_{GH}$ to $\Omega_2$. The generator torque is increased from $Tq_G$ to $Tq_F$ starting at the time point $t_{11}$ at which the rotor rotation speed is equal to $\Omega_2$. Accordingly, the rotor rotation speed is decreased to $\Omega_1$ at a time point $t_{12}$. The generator torque is maintained at $Tq_F$ from the time point $t_{12}$ to the time point $t_{14}$, such that the rotor rotation speed is maintained at $\Omega_{EF}$ after this control, and the blade pitch angle temporarily changes from $\theta_{fine}$ to $\theta_2$. Further, the generator torque is decreased from $Tq_F$ to $Tq_E$ from the time point $t_{14}$ to the time point $t_{15}$, and the rotor rotation speed is maintained at $\Omega_{EF}$.

In this manner, the operation control unit 101 according to the present invention is applied, thereby a period, during which the rotor rotation speed remains in a range of $\Omega_2$ to $\Omega_1$ which is in the vicinity of the natural frequency $\Omega_{TE}$ of the tower is shortened to a period of the time point $t_{11}$ to the time point $t_{12}$, and thus it is possible to reduce an occurrence of the resonance of the tower.

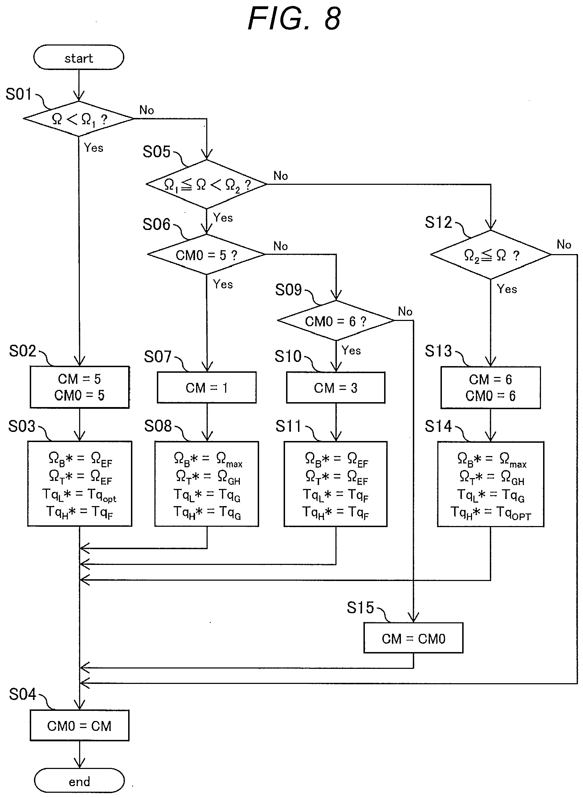

Fig. 8 is a flowchart illustrating an overview of a process of the target value calculating section 301 in the operation control unit 101 according to the present invention.

In Step S01, whether or not the rotor rotation speed is lower than a value of $\Omega_1$ which is lower than the natural frequency $\Omega_{TE}$ of the tower is determined, and, in a case where the rotor rotation speed is lower than $Q_1$, the fifth control mode is performed and the flow proceeds to Step S02. In Step S02, CM and CM0 = 5 as a value in the previous time of CM are set and the flow proceeds to Step S03. In Step S03, $\Omega_{EF}$ is set to a rotor rotation speed target value for controlling the blade pitch angle and a rotor rotation speed target value for controlling the generator torque such that the fifth control mode is performed in Step S03, $Tq_{opt}$ is set to a generator torque lower limit target value, $Tq_F$ is set to a generator torque upper limit target value, and the flow proceeds to Step S04. Note that $Tq_{opt}$ is the generator torque determined based on Expression (1) described above. Subsequently, in Step S04, CM0 = CM is set and a series of operations are ended.

In a case where the rotor rotation speed is equal to or higher than $\Omega_1$ in Step S01, the flow proceeds to Step S05. In Step S05, whether the rotor rotation speed is equal to or higher than a value of $\Omega_1$ which is lower than the natural frequency $\Omega_{TE}$ of the tower, and is lower than a value of $\Omega_2$ which is larger than the natural frequency $\Omega_{TE}$ of the tower is determined, and, in a case where the rotor rotation speed is equal to or higher than $\Omega_1$ and lower than $\Omega_2$, the flow proceeds to Step S06. In a case other than the case where the rotor rotation speed is equal to or higher than $\Omega_1$ and lower than $\Omega_2$, the flow proceeds to Step S12. Then, according to the flowchart in Fig. 8, a series of operations are ended by reaching Step S04 through any flow from Step S06 to Step S15.

As described above, even when the natural frequency of the tower is included within the control range of the rotor rotation speed due to an environment of use, the wind power generating system and the method for controlling the wind power generating system according to the present invention enables fatigue accumulation and the maximum load increase due to resonance of a tower to be reduced.

Thus, it is possible to achieve improvement of reliability, prolonged service life, and improvement of efficiency in the power generation of the wind power generating system.

Note that the present invention is not limited to the example described above, and includes various modification examples. For example, the example described above is described in detail such that it is easy to understand the present invention, and the present invention is not limited to an example that has the entire configurations described above. In addition, it is possible to interchange between a part of a configuration of an example and the configuration of another example, and it is possible to add a configuration of an example to a configuration of another example. In addition, it is possible to add, remove, and interchange a configuration with respect to a part of the configurations of the examples.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A wind power generating system (1) comprising:

   a rotor (4) that receives wind and rotates;
   a tower (8) that supports a load of the rotor (4);
   a power generator (6) that generates power using rotation energy of the rotor (4); and
   a controller (9) that controls generator torque of the power generator (6) and a rotor rotation speed of the rotor (4),

   wherein the controller (9) transitions to a first control mode in which the generator torque is reduced in a case where the rotor rotation speed is increased and is equal to or exceeds a first rotor rotation speed, then, continuously operates in the first control mode, and transitions to a second control mode in which a slope of the generator torque with respect to the rotor rotation speed is different from a slope in the first control mode, and
   wherein the controller (9) transitions to a third control mode in which the generator torque is increased, in a case where the rotor rotation speed is decreased and is lower than a second rotor rotation speed, then, continuously operates in the third control mode, and transitions to a fourth control mode in which the slope of the generator torque with respect to the rotor rotation speed is different from a slope in the third control mode.

2. The wind power generating system (1) according to claim 1,
   wherein the controller (9) sets generator torque and rotor rotation speed which are different between in the case where the rotor rotation speed is increased and is equal to or exceeds the first rotor rotation speed and in the case where the rotor rotation speed is decreased and is lower than the second rotor rotation speed.

3. The wind power generating system (1) according to claim 1,
   wherein the generator torque is constantly controlled in at least one of the second control mode and the fourth control mode.

4. The wind power generating system (1) according to claim 1,
   wherein the first rotor rotation speed and the second rotor rotation speed are either a preset value or a value set based on an output value of a sensor that measures a state of the wind power generating system (1).

5. The wind power generating system (1) according to claim 1,
   wherein the controller (9) transitions to a fifth control mode in which the generator torque is increased to a third or fourth generator torque value while the rotor rotation speed is maintained, before transition is performed to the first control mode in the case where the rotor rotation speed is increased and is equal to or exceeds the first rotor rotation speed, and
   wherein the controller (9) transitions to a sixth control mode in which the generator torque value is decreased to a first or second generator torque value while the rotor rotation speed is maintained, before transition is performed to the third control mode in the case where the rotor rotation speed is decreased and is lower than the second rotor rotation speed.

6. The wind power generating system (1) according to claim 1,
   wherein the controller (9) controls a pitch angle of a blade (2) of the rotor (4), thereby controlling the rotor rotation speed.

7. A method for controlling a wind power generating system (1) comprising:

transitioning to a first control mode in which the generator torque is reduced in a case where a rotor rotation speed is increased and is equal to or exceeds a first rotor rotation speed;
transitioning to a second control mode in which a slope of generator torque with respect to a rotor rotation speed is different from a slope in the first control mode, after the transitioning to the first control mode;
transitioning to a third control mode in which generator torque is increased, in a case where a rotor rotation speed is decreased and is lower than a second rotor rotation speed; and
transitioning to a fourth control mode in which a slope of generator torque with respect to a rotor rotation speed is different from a slope in the third control mode, after the transitioning to the third control mode.

8. The method for controlling a wind power generating system (1) according to claim 7, further comprising:

setting generator torque and rotor rotation speed which are different between in the case where the rotor rotation speed is increased and is equal to or exceeds the first rotor rotation speed and in the case where the rotor rotation speed is decreased and is lower than the second rotor rotation speed.

9. The method for controlling a wind power generating system (1) according to claim 7, further comprising:

controlling generator torque constantly in at least one of the second control mode and the fourth control mode.

10. The method for controlling a wind power generating system (1) according to claim 7, wherein the first rotor rotation speed and the second rotor rotation speed are either a preset value or a value set based on an output value of a sensor that measures a state of the wind power generating system (1).

11. The method for controlling a wind power generating system (1) according to claim 7, further comprising:

transitioning to a fifth control mode in which the generator torque is increased to a third or fourth generator torque value while the rotor rotation speed is maintained, before transition is performed to the first control mode in the case where the rotor rotation speed is increased and is equal to or exceeds the first rotor rotation speed, and
transitioning to a sixth control mode in which the generator torque value is decreased to a first or second generator torque value while the rotor rotation speed is maintained, before transition is performed to the third control mode in the case where the rotor rotation speed is decreased and is lower than the second rotor rotation speed.

12. The method for controlling a wind power generating system (1) according to claim 7, controlling the rotor rotation speed by controlling a pitch angle of a blade (2) of the rotor (4).

# FIG. 1

FIG. 2

# FIG. 3

ROTOR ROTATION SPEED TARGET
VALUE FOR CONTROLLING
BLADE PITCH ANGLE

$\Omega_B{}^*$

301

$\Omega$
ROTOR
ROTATION
SPEED

TARGET
VALUE
CALCULATING
SECTION

302

BLADE PITCH
ANGLE
CONTROLLING
SECTION

BLADE PITCH
ANGLE TARGET
VALUE
$\theta_{dem}$

ROTOR ROTATION
SPEED TARGET VALUE FOR
CONTROLLING GENERATOR TORQUE

$\Omega_T{}^*$

GENERATOR
TORQUE
CONTROLLING
SECTION

$Tq_{dem}$
GENERATOR
TORQUE
TARGET
VALUE

GENERATOR TORQUE $Tq_L{}^*$
LOWER LIMIT TARGET
VALUE

303

GENERATOR TORQUE $Tq_H{}^*$
UPPER LIMIT TARGET
VALUE

101

# FIG. 4

## FIG. 5

# FIG. 6

# FIG. 7

# FIG. 8

start

S01 — $\Omega < \Omega_1$ ? — No → S05

S05 — $\Omega_1 \leqq \Omega < \Omega_2$ ? — No → S12

S06 — CM0 = 5 ? — No → S09

S09 — CM0 = 6 ? — No

S12 — $\Omega_2 \leqq \Omega$ ? — No

S01 Yes ↓

S02
CM = 5
CM0 = 5

S07
CM = 1

S10
CM = 3

S13
CM = 6
CM0 = 6

S03
$\Omega_B^* = \Omega_{EF}$
$\Omega_T^* = \Omega_{EF}$
$Tq_L^* = Tq_{opt}$
$Tq_H^* = Tq_F$

S08
$\Omega_B^* = \Omega_{max}$
$\Omega_T^* = \Omega_{GH}$
$Tq_L^* = Tq_G$
$Tq_H^* = Tq_G$

S11
$\Omega_B^* = \Omega_{EF}$
$\Omega_T^* = \Omega_{EF}$
$Tq_L^* = Tq_F$
$Tq_H^* = Tq_F$

S14
$\Omega_B^* = \Omega_{max}$
$\Omega_T^* = \Omega_{GH}$
$Tq_L^* = Tq_G$
$Tq_H^* = Tq_{OPT}$

S15
CM = CM0

S04
CM0 = CM

end

Europäisches
Patentamt

European
Patent Office

Office européen
des brevets

## EUROPEAN SEARCH REPORT

Application Number

EP 16 20 2852

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 187 912 A (SHENYANG INST AUTOMATION) 3 July 2013 (2013-07-03) * the whole document * | 1-12 | INV. F03D7/02 |
| X,D | EP 2 113 659 B1 (GAMESA INNOVATION & TECH SL [ES]) 17 December 2014 (2014-12-17) * the whole document * | 1-4, 6-10,12 | |

TECHNICAL FIELDS
SEARCHED       (IPC)

F03D

The present search report has been drawn up for all claims

| Place of search | Date of completion of the search | Examiner |
|---|---|---|
| The Hague | 12 April 2017 | Libeaut, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 2852

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2017

| Patent document cited in search report | | Publication date | Patent family member(s) | | Publication date |
|---|---|---|---|---|---|
| CN 103187912 | A | 03-07-2013 | NONE | | |
| EP 2113659 | B1 | 17-12-2014 | EP 2113659 A2 | | 04-11-2009 |
| | | | ES 2532253 T3 | | 25-03-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2113659 B1